(19) **Europäisches Patentamt European Patent Office Office européen des brevets**

(11) **EP 1 878 816 B1**

(12) **EUROPEAN PATENT SPECIFICATION**

(45) Date of publication and mention of the grant of the patent:
**28.03.2012 Bulletin 2012/13**

(21) Application number: **06714919.5**

(22) Date of filing: **28.02.2006**

(51) Int Cl.:
*D01F 9/127* (2006.01)     *D06M 15/03* (2006.01)
*D06M 15/09* (2006.01)     *H01M 4/96* (2006.01)
*D06M 101/40* (2006.01)

(86) International application number:
**PCT/JP2006/303793**

(87) International publication number:
**WO 2006/100877 (28.09.2006 Gazette 2006/39)**

(54) **CARBON FIBER CONJUGATE**

CARBONFASERKONJUGAT

CONJUGUE DE FIBRES DE CARBONE

(84) Designated Contracting States:
**AT BE BG CH CY CZ DE DK EE ES FI FR GB GR HU IE IS IT LI LT LU LV MC NL PL PT RO SE SI SK TR**

(30) Priority: **22.03.2005 JP 2005082777**

(43) Date of publication of application:
**16.01.2008 Bulletin 2008/03**

(73) Proprietor: **Hodogaya Chemical Co., Ltd. Tokyo 105-0011 (JP)**

(72) Inventors:
• **HANDA, Koichi c/o Bussan Nanotech Research Tokyo, 1000004 (JP)**
• **Subiantoro**
**c/o Bussan Nanotech Research Institute Inc., Chiyoda-ku, Tokyo, 100-0004 (JP)**

• **TSUKADA, Takayuki c/o Bussan Nanotech Research Tokyo, 1000004 (JP)**
• **SHAN, Jiayi c/o Bussan Nanotech Research Tokyo, 1000004 (JP)**
• **OKUBO, Tsuyoshi c/o Bussan Nanotech Research Tokyo, 1000004 (JP)**

(74) Representative: **Giovannini, Francesca et al Osha Liang**
**32, avenue de l'Opéra**
**75002 Paris (FR)**

(56) References cited:
**EP-A- 1 707 655          WO-A1-03/040445**
**WO-A1-2004/044289     JP-A- 08 060 446**
**JP-A- 11 107 052          JP-A- 2002 266 170**
**JP-A- 2003 201 630       JP-A- 2004 119 386**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 878 816 B1

**Description**

TECHNICAL FIELD

This invention relates to a carbon fibrous conjunct which is composed of fine carbon fibrous structures each having a specific form and a binder.

BACKGROUND ART

Heretofore, composite preparation with plural materials has been developed in order to attain a unique characteristic which has been never obtained by any single material. As a composite material, glass fiber reinforced plastic had been widely utilized. After carbon fibers and reinforced plastic using thereof (CFRP) has been developed, the composite material has particularly come into general use.

These material has been widely used for sporting goods and so on, and come into focus as a light weight-, high intensity- and high elastic modulus- structural material for aircraft. Further, in addition to the fiber reinforced materials, minute particle reinforced materials have been also developed as the composite material. From another viewpoint, in addition to structural materials of which strength and a heat resistance and so on are regarded as of important, functional materials of which electric and electronic characteristics, optical characteristics, chemical characteristics are regarded as of important are handled as the composite materials.

Incidentally, as various electronic devices' penetration increases, troubles such as electric wave hindrance that the noise which occurs from a certain electronic component has an influence on peripheral equipments, and malfunction by static electricity, increase and become a big problem. In order to solve these problems, the required is the material which is excellent in the conductivity and the damping ability in this field.

Conventionally, a conductive high molecular material which is prepared by blending a high conductivity filler or the likes to a high molecular material of low conductivity is widely used. As the conductive filler, a metallic fiber, and metallic powder, a carbon black, a carbon fiber and so on are generally used. When using a metallic fiber and metallic powder as the conductive filler, however, there is a fault that the material thus obtained is inferior to the corrosion resistance and also that it is difficult to get an ample mechanical strength. When using a carbon fiber as the conductive filler, it is possible to attain a predetermined strength and elastic modulus at a relative high additive amount of the filler, but not to attain an ample electrical conductivity. Unfortunately, to use the carbon fiber at an additive amount large enough to attain the predetermined conductivity will be followed by the deterioration of the properties intrinsically owned by the original high molecular material. Incidentally, with respect to the carbon fiber, it is expected that the conductivity imparting effect becomes high as its diameter becomes small at an equivalent additive amount, because the contact area between the fiber added and the matrix resins becomes large.

The carbon fiber may be currently manufactured by subjecting an organic polymer as a precursor, particularly, a continuous filament of cellulose or polyacrylonitrile, to thermally decomposition under a control condition where a forced tension against the precursor is carefully maintained so as to appear a good orientation of anisotropy sheets of carbon atoms in the final product filament. Because of such manufacturing process, the weight loss during the carbonization process and the delay for carbonization rate become high, and a conclusion deduced from the facts is that the carbon fiber is expensive.

Moreover, in recent years, as the different one about the carbon fiber, fine carbon fibers such as carbon nano structures, which are represented by the carbon nanotube (hereinafter, referred to also as "CNT".) have become a focus of attention.

The graphite layers which compose the carbon nano structure are materials each of which takes a six membered ring's regular array normally, and which can bring specific electrical properties, as well as chemically, mechanically, and thermally stable properties. Therefore, as long as such fine carbon fiber can make use of such properties upon blending and dispersing to the solid material involving various resins, ceramics, and metals, etc., or to the liquid material involving fuels, lubricant agents, etc., its usefulness as the additive can be expected.

On the other hand, however, such fine carbon fibers unfortunately show an aggregate state even just after their synthesis. When the aggregate is used as-is, it would arrive at a conclusion that the dispersion of the fine carbon fibers does not progress very far, and thus the product obtained can not enjoy ample properties. Accordingly, giving a desired property such as electric conductivity to a matrix such as resin, it is necessitated that the fibers are added as a larger amount than the intrinsic amount with which the desired property would be attained as far as the fibers function essentially.

Patent Literature 1 discloses a resin composition which includes aggregates each of which is composed of carbon fibrils having 3.5 - 70 nm in diameter and being entangled mutually, and the aggregates possessing a maximum diameter of not more than 0.25 mm, and a diameter in the range of 0.10 to 0.25 mm. It is noted that the numeric data such as the maximum diameter, diameter, etc., for the carbon fibril aggregate are those measured prior to the blending into resin, as is clear from description in examples and other parts of Patent Literature 1.

Patent Literature 2 discloses a composite material where a carbon fibrous material is added to the matrix, the carbon fibrous material mainly comprising aggregates each of which is composed of carbon fibers having 50 - 5000 nm in diameter, the mutual contacting points among the carbon fibers being fixed with carbonized carbonaceous substance, and each aggregates having a size of 5 $\mu$m - 500 $\mu$m. In Patent Literature 2, the numeric data such as the size of aggregate, etc., are those measured prior to the blending into resin, too.

Using such carbon fiber aggregates, it will be expected that the dispersibility to the resin matrix improves to a certain degree as compared with that in the case of using bigger lumps of carbon fibers. The aggregate according to Patent Literature 1, however, has a high bulk density, because it is prepared by dispersing carbon fibrils under a certain shearing force, for instance, in a vibrating ball mill, etc. Thus, it can not satisfy the thirst for acquisition of an ideal additive which improves various characteristics of the matrix, such as electric conductivity, effectively at a minuscule dosage. In the carbon fibrous structure disclosed in Patent Literature 2, the fixing of the fibers at the contacting points is performed after the carbon fibers' preparation, in such a manner that the carbon fibers undergo heat treatment in a state that mutual contacting points among the carbon fibers are formed by compression molding after synthesis of the carbon fibers, and thus the fixing of the fibers at the contacting points is done by carbonization of organic residue such as pitch primarily attached to the surface of the carbon fibers or carbonization of an organic compound additionally added as a binder. Since the fixing is performed by such a heat treatment after synthesis of the carbon fibers, the fixing force at the contacting points is weak, and the electrical properties of the carbon fibrous structure itself do not become so good. When the carbon fibrous structures are added to a matrix such as resin, the carbon fibers fixed at the contacting points are easily detached from each other, and thus the structure as the carbon fiber structure is no longer maintained in the matrix. Therefore, itisnotpossible to construct preferable conductive paths in the matrix which contribute good electrical properties to the matrix by a small additive amount. Furthermore, when the binder is added in order to promote the fixing at the contacting points and undergoes carbonization, the fibers in the obtained fibrous structure would become large in the diameter thereof and possess inferior surface characteristics because the binder added is attached to the whole area of the fibers rather than a limited area of the contacting points.

Patent Literature 1: Japanese Patent No. 2862578

Patent Literature 2: Japanese Patent Unexamined Publication 2004-119386 (JP 2004-119386 A)

EP-A-1 707 655 describes a carbon fibrous structure comprising a three dimensional network of carbon fibers having an outside diameter of 15 - 100 nm, the carbon fibrous structure comprising a granular part with which the carbon fibers are bound together in the state that the carbon fibers are externally elongated therefrom, the granular part being produced in a growth process of the carbon fibers, and the size of the granular part being 1.3 or more times larger than the outside diameter of the carbon fibers.

DISCLOSURE OF THE INVENTION

PROBLEM TO BE SOLVED BY THE INVENTION

Therefore, this invention aims to provide a fine carbon fibrous conjunct which enjoys physical properties suitable for filler to be used for composite material, and which is composed of fine carbon fibrous structures each having a specific form and a binder.

MEANS FOR SOLVING THE PROBLEM

The present invention discloses a carbon fibrous conjunct which is composed of fine carbon fibrous structures and a binder by which the carbon fibrous structures are bound together and defined as in appended claim 1.

The present invention further discloses the carbon fibrous conjunct according to the preferred embodiments of appended claims 2 - 5.

EFFECT OF THE INVENTION

According to the present invention, since the carbon fibrous conjunct of a high strength and a high density can be provided, the carbon fibrous conjunct can be utilized for a composite material which is useful as a functional material having good electric conductivity, electric wave shielding ability, heat conductivity, etc., as a structural material having a high strength, or the like.

BRIEF DESCRIPTION OF THE DRAWINGS

[Fig. 1] is a scanning electron micrograph (SEM photo) of an intermediate for the carbon fibrous structure which is used for the carbon fibrous conjunct according to the present invention.

[Fig. 2] is a transmission electron micrograph (TEM photo) of an intermediate for the carbon fibrous structure which is used for the carbon fibrous conjunct according to the present invention.

[Fig. 3] is a scanning electron micrograph (SEM photo) of a carbon fibrous structure which is used for the carbon fibrous conjunct according to the present invention.

[Fig. 4A] and [Fig.4B] are transmission electron micrographs (TEM photo) of a carbon fibrous structure which is used for the carbon fibrous conjunct according to the present invention.

[Fig. 5] is another a scanning electron micrograph (SEM photo) of a carbon fibrous structure which is used for the carbon fibrous conjunct according to the present invention.

[Fig. 6] is an X-ray diffraction chart of a carbon fibrous structure which is used for the carbon fibrous conjunct according to the present invention and an intermediate thereof.

[Fig. 7] is Raman spectra of a carbon fibrous structure which is used for the carbon fibrous conjunct according to the present invention and an intermediate thereof.

[Fig. 8] is an schematic diagram which illustrates a generation furnace used for manufacturing the carbon fibrous structures in an example of the present invention.

EXPLANATION OF NUMERALS

1    Generation furnace
2    Inlet nozzle
3    Collision member
4    Raw material mixture gas supply port
a    Inner diameter of inlet nozzle
b    Inner diameter of generation furnace
c    Inner diameter of Collision member
d    Distance from upper end of generation furnace to raw material mixture gas supply port
e    Distance from raw material mixture gas supply port to lower end of collision member
f    Distance from raw material mixture gas supply port to lower end of generation furnace

BEST MODE FOR CARRYING OUT THE INVENTION

Now, the present invention will be described in detail with reference to some preferable embodiments which are non-restrictive ones, and disclosed only for the purpose of facilitating the illustration and understanding of the present invention.

The carbon fibrous conjunct according to the present invention is composed of carbon fibrous structures each having a specific structure as mentioned later and a binder which is added in order to bind the carbon fibrous structures together.

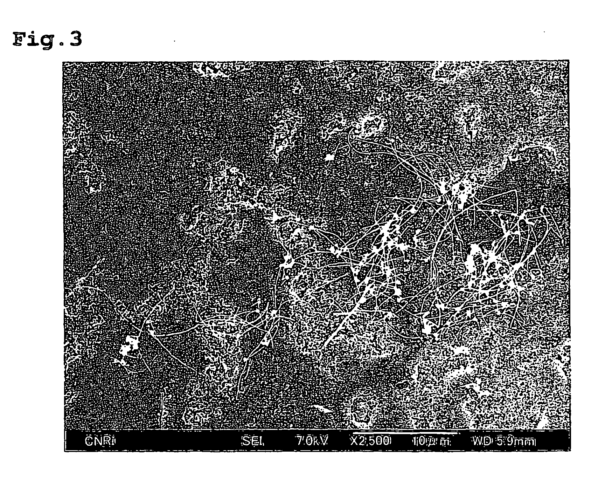

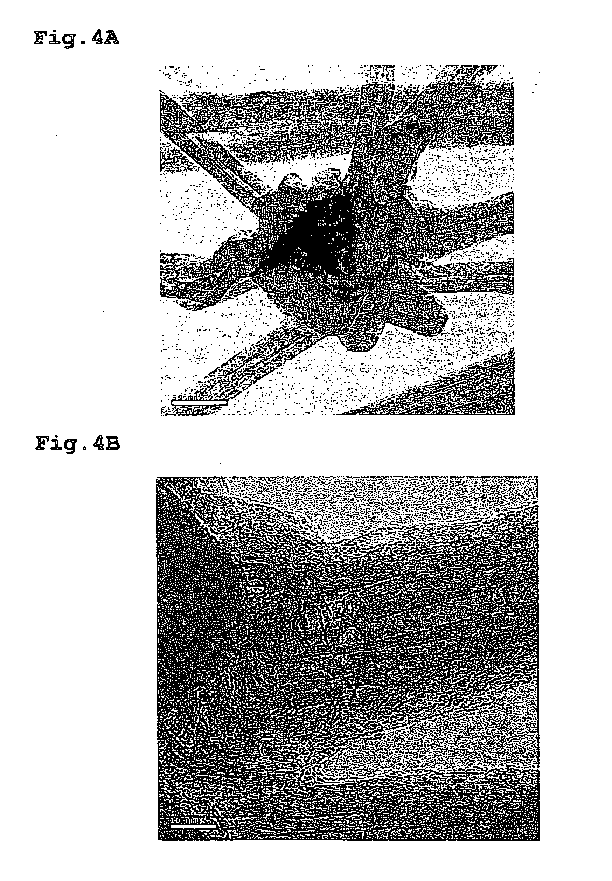

Each carbon fibrous structure to be used for the carbon fibrous conjunct according to the present invention is, as shown in SEM photo of Fig. 3 and TEM photos of Fig. 4A and 4B, composed of a thee-dimensionally network of carbon fibers each having an outside diameter of 15 - 100 nm, and a granular part with which the carbon fibers are bound together so that the concerned carbon fibers elongate outwardly from the granular part.

The reason for restricting the outside diameter of the carbon fibers to a range of 15 nm to 100 nm is because when the outside diameter is less than 15 nm, the cross-sections of the carbon fibers do not have polygonal figures as described later. According to physical properties, the smaller the diameter of a fiber, the greater the number of carbon fibers will be for the same weight and/or the longer the length in the axial direction of the carbon fiber. This property would be followed by an enhanced electric conductivity. Thus, carbon fibrous structures having an outside diameter exceeding 100 nm are not preferred for use as modifiers or additives for a matrix such as a resin, etc. Particularly, it is more desirable for the outside diameter of the carbon fibers to be in the range of 20 - 70 nm. Carbon fibers that have a diameter within the preferable range and whose tubular graphene sheets are layered one by one in the direction that is orthogonal to the fiber axis, i.e., being of a multilayer type, can enjoy a high flexural rigidity and ample elasticity. In other words, such fibers would have a property of being easy to restore their original shape after undergoing any deformation. Therefore, even if the carbon fibrous structures have been compressed prior to being mixed into the matrix material, they tend to take a sparse structure in the matrix.

Incidentally, when annealing at a temperature of not less than 2400°C, the spacing between the layered graphene sheets becomes lesser and the true density of the carbon fiber is increased from 1.89 $g/cm^3$ to 2.1 $g/cm^3$, and

the cross sections of the carbon fiber perpendicular to the axis of carbon fiber come to show polygonal figures. As a result, the carbon fibers having such constitution become denser and have fewer defects in both the stacking direction and the surface direction of the graphene sheets that make up the carbon fiber, and thus their flexural rigidity (EI) can be enhanced.

Additionally, it is preferable that the outside diameter of the fine carbon fiber undergoes a change along the axial direction of the fiber. In the case that the outside diameter of the carbon fiber is not constant, but changed along the axial direction of the fiber, it would be expected that some anchor effect may be provided to the carbon fiber in the matrix material, and thus the migration of the carbon fiber in the matrix can be restrained, leading to improved dispersion stability.

Then, in the carbon fibrous structure used in the present invention, fine carbon fibers having a predetermined outside diameter and being configured three dimensionally are bound together by a granular part produced in a growth process of the carbon fibers so that the carbon fibers are elongated outwardly from the granular part. Since multiple carbon fibers are not only entangled each other, but tightly bound together at the granular part, the carbon fibers will not disperse as single fibers, but will be dispersed as intact bulky carbon fibrous structures when added to a matrix such as a resin. Since the fine carbon fibers are bound together by a granular part produced in the growth process of the carbon fibers in the carbon fibrous structure to be used in the present invention, the carbon fibrous structure itself can enjoy superior properties such as electric property. For instance, when determining electrical resistance under a certain pressed density, the carbon fibrous structure to be used in the present invention shows an extremely low resistivity, as compared with that of a simple aggregate of the fine carbon fibers and that of the carbon fibrous structures in which the fine carbon fibers are fixed at the contacting points with a carbonaceous material or carbonized substance therefrom after the synthesis of the carbon fibers. Thus, when the carbon fibrous structures added and distributed in a matrix, they can form good conductive paths within the matrix.

Since the granular part is produced in the growth process of the carbon fibers as mentioned above, the carbon - carbon bonds at the granular part are well developed. Further, the granular part appears to include mixed state of sp2- and sp3- bonds, although it is not clear accurately. After the synthesis process (in the "intermediate" or "first intermediate" defined hereinafter ), the granular part and the fibrous parts are continuous mutually because of a structure comprising patch-like sheets of carbon atoms laminated together. Further, after the high temperature treatment, at least a part of graphene layers constituting the granular part is continued on graphene layers constituting the fine carbon fibers elongated outwardly from the granular part, as shown in Figs. 4A and 4B. In the carbon fibrous structure according to the present invention, as symbolized by such a fact that the graphene layers constituting the granular part is continued on the graphene layers constituting the fine carbon fibers, the granular part and the fine carbon fibers are bound together (at least in a part) by carbon crystalline structural bonds. Thus, strong couplings between the granular part and each fine carbon fiber are produced.

With respect to the carbon fibers, the condition of being "extended outwardly" from the granular part used herein means principally that the carbon fibers and granular part are linked together by carbon crystalline structural bonds as mentioned above, but does not means that they are apparently combined together by any additional binding agent (involving carbonaceous ones).

As traces of the fact that the granular part is produced in the growth process of the carbon fibers as mentioned above, the granular part has at least one catalyst particle or void therein, the void being formed due to the volatilization and elimination of the catalyst particle during the heating process after the generation process. The void (or catalyst particle) is essentially independent from hollow parts which are formed in individual fine carbon fibers which are extended outwardly from the granular part (although, a few voids which happened to be associate with the hollow part may be observed).

Although the number of the catalyst particles or voids is not particularly limited, it may be about 1 - 1000 a granular particle, more preferably, about 3 - 500 a granular particle. When the granular part is formed under the presence of catalyst particles the number of which is within the range mentioned above, the granular part formed can have a desirable size as mentioned later.

The per-unit size of the catalyst particle or void existing in the granular particle may be, for example, 1 - 100 nm, preferably, 2 - 40 nm, and more preferably, 3 - 15 nm.

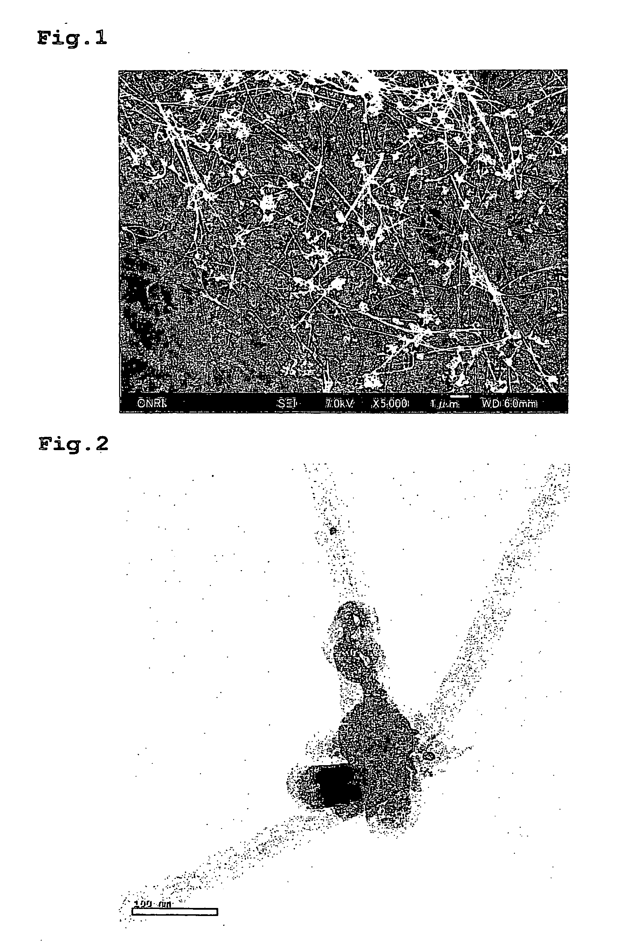

Furthermore, it is preferable that the diameter of the granular part is larger than the outside diameter of the carbon fibers as shown in Fig.2, although it is not specifically limited thereto. Concretely, for example, the diameter of granular part is 1.3 - 250 times larger than the outside diameter of the carbon fibers, preferably 1.5 - 100 times, and more preferably, 2.0 - 25 times larger, on average. When the granular part, which is the binding site of the carbon fibers, has a much larger particle diameter, that is, 1.3 times or more larger than the outer diameter of the carbon fibers, the carbon fibers that are elongated outwardly from the granular part have stronger binding force, and thus, even when the carbon fibrous structures are exposed to a relatively high shear stress during combining with a matrix such as resin, they can be dispersed as maintaining its three-dimensional carbon fibrous structures into the matrix. When the granular part has an extremely larger particle diameter, that is, exceeding 250 times of the outer diameter of the carbon fibers, the undesirable possibility that the fibrous characteristics of the carbon fibrous structure are lost will arise. Therefore, the carbon fibrous structure will not be suitable for an additive or compounding agent to a various matrix, and thus it is not desirable. The "particle diameter of the granular part" used herein is the value which is measured by assuming that the granular part, which is the binding site for the mutual carbon fibers, is one spherical particle.

Although the concrete value for the particle diameter of the granular part will be depended on the size of the carbon fibrous structure and the outer diameters of the fine carbon fibers in the carbon fibrous structure, for example, it may be 20 - 5000 nm, more preferably, 25 - 2000 nm, and most preferably, 30 - 500 nm, on average.

Furthermore, the granular part may be roughly globular in shape because the part is produced in the growth process of the carbon fibers as mentioned above. On average, the degree of roundness thereof may lay in the range of from 0.2 to <1, preferably, 0.5 to 0.99, and more preferably, 0.7 to 0.98.

Additionally, the binding of the carbon fibers at the granular part is very tight as compared with, for example, that in the structure in which mutual contacting points among the carbon fibers are fixed with carbonaceous material or carbonized substance therefrom. It is also because the granular part is produced in the growth process of the carbon fibers as mentioned above. Even under such a condition as to bring about breakages in the carbon fibers of the carbon fibrous structure, the granular part (the binding site) is maintained stably. Specifically, for example, when the carbon fibrous structures are dispersed in a liquid medium and then subjected to ultrasonic treatment with a selected wavelength and a constant power under a load condition by which the average length of the carbon fibers is reduced to about half of its initial value as shown in the Examples described later, the changing rate in the mean diameter of the granular parts is not more than 10%, preferably, not more than 5%, thus, the granular parts, i.e., the binding sites of fibers are maintained stably.

In carbon fibrous structures to be used in the present invention, it is preferable that the carbon fibrous structure has an area-based circle-equivalent mean diameter of 50 - 100 $\mu$m, and more preferably, 60 - 90 $\mu$m. The "area-based circle-equivalent mean diameter" used herein is the value which is determined by taking a picture of the outside shapes of the carbon fibrous structures with a suitable electron microscope, etc., tracing the contours of the respective carbon fibrous structures in the obtained picture using a suitable image analysis software, e.g., WinRoof™ (Mitani Corp.), and measuring the area within each individual contour, calculating the circle-equivalent mean diameter of each individual carbon fibrous structure, and then, averaging the calculated data.

Although it is not to be applied in all cases because the circle-equivalent mean diameter may be influenced by the kind of matrix material such as a resin to be complexed, the circle-equivalent mean diameter may become a factor by which the maximum length of a carbon fibrous structure upon combining with a matrix such as a resin is determined. In general, when the circle-equivalent mean diameter is not more than 50 $\mu$m, the electrical conductivity of the obtained composite may not be expected to reach a sufficient level, while when it exceeds 100 $\mu$m, an undesirable increase in viscosity may be expected to happen upon kneading of the carbon fibrous structures in the matrix. The increase in viscosity may be followed by failure of dispersion or may result in an inferior moldability.

As mentioned above, the carbon fibrous structure according to the present invention has the configuration where the fine carbon fibers existing in three dimensional network state are bound together by the granular part (s) so that the carbon fibers extend outwardly from the granular part(s). When two or more granular parts are present in a carbon fibrous structure, wherein each granular part binds the fibers so as to form the three dimensional network, the mean distance between adjacent granular parts may be, for example, 0.5 - 300 $\mu$m, preferably, 0.5 - 100 $\mu$m, and more preferably, 1 - 50 $\mu$m. The distance between adjacent granular parts used herein is determined by measuring distance from the center of a granular part to the center of another granular part which is adjacent the former granular part. When the mean distance between the granular parts is not more than 0.5 $\mu$m, a configuration where the carbon fibers form an inadequately developed three dimensional network may be obtained. Therefore, it may become difficult to form good electric conductive paths when the carbon fiber structures each having such an inadequately developed three dimensional network are added and dispersed to a matrix. Meanwhile, when the mean distance exceeds 300 $\mu$m, an undesirable increase in viscosity may be expected to happen upon adding and dispersing the carbon fibrous structures in the matrix. The increase in viscosity may result in an inferior dispersibility.

Furthermore, the carbon fibrous structure to be used in the present invention may exhibit a bulky, loose form in which the carbon fibers are sparsely dispersed, because the carbon fibrous structure is comprised of carbon fibers that are configured as a three dimensional network and are bound together by a granular part so that the carbon fibers are elongated outwardly from the granular part as mentioned above. It is desirable that the bulk density thereof is in the range of 0.0001 - 0.05 g/cm$^3$, more preferably, 0.001 - 0.02 g/cm$^3$. When the bulk density exceeds 0.05 g/cm$^3$, the improvement of the physical properties in a matrix such as a resin would become difficult with a small dosage.

Furthermore, a carbon fibrous structure to be used in the present invention can enjoy good electric properties in itself, since the carbon fibers configured as a three dimensional network in the structure are bound together by a granular part produced in the growth process of the carbon fibers as mentioned above. For instance, it is desirable that a carbon fibrous structure to be used in the present invention has a powder electric resistance determined under a certain pressed density, 0.8 g/cm$^3$, of not more than 0.02 $\Omega \cdot$ cm, more preferably, 0.001 to 0.010 $\Omega \cdot$ cm. If the particle's resistance exceeds 0.02 Ω·cm, it may become difficult to form good electrically conductive paths when the structures are added to a matrix such as a resin.

In order to enhance the strength and electric conductivity of a carbon fibrous structure to be used in the present invention, it is desirable that the graphene sheets that make up the carbon fibers have a small number of defects, and more specifically, for example, the $I_D/I_G$ ratio of the carbon fiber determined by Raman spectroscopy is not more than 0.2, more preferably, not more than 0.1. Incidentally, in Raman spectroscopic analysis, with respect to a large single crystal graphite, only the peak (G band) at 1580 cm$^{-1}$ appears. When the crystals are of finite ultrafine sizes or have any lattice defects, the peak (D band) at 1360 cm$^{-1}$ can appear. Therefore, when the intensity ratio ($R=I_{1360}/I_{1580}=I_D/I_G$) of the D band and the G band is below the selected range as mentioned above, it is possible to say that there is little defect in graphene sheets.

Furthermore, it is desirable that the carbon fibrous structure to be used in the present invention has a combustion initiation temperature in air of not less than 750°C, preferably, 800°C - 900 °C. Such a high thermal stability would be brought about by the above mentioned facts that it has little defects and that the carbon fibers have a predetermined outside diameter.

A carbon fibrous structure having the above described, desirable configuration may be prepared as follows, although it is not limited thereto.

Basically, an organic compound such as a hydrocarbon is chemical thermally decomposed through the CVD process in the presence of ultrafine particles of a transition metal as a catalyst in order to obtain a fibrous structure (hereinafter referred to as an "intermediate"), and then the intermediate thus obtained undergoes a high temperature heating treatment.

As a raw material organic compound, hydrocarbons such as benzene, toluene, xylene; carbon monoxide (CO); and alcohols such as ethanol may be used. It is preferable, but not limited, to use as carbon sources at least two carbon compounds which have different decomposition temperatures. Incidentally, the words "at least two carbon compounds" used herein not only include two or more kinds of raw materials, but also include one kind of raw material that can undergo a reaction, such as hydrodealkylation of toluene or xylene, during the course of synthesis of the fibrous structure such that in the subsequent thermal decomposition procedure it can function as at least two kinds of carbon compounds having different decomposition temperatures.

When as the carbon sources at least two kinds of carbon compounds are provided in the thermal decomposition reaction system, the decomposition temperatures of individual carbon compounds may be varied not only by the kinds of the carbon compounds, but also by the gas partial pressures of individual carbon compounds, or molar ratio between the compounds. Therefore, as the carbon compounds, a relatively large number of combinations can be used by adjusting the composition ratio of two or more carbon compounds in the raw gas.

For example, the carbon fibrous structure to be used in the present invention can be prepared by using two or more carbon compounds in combination, while adjusting the gas partial pressures of the carbon compounds so that each compound performs mutually different decomposition temperature within a selected thermal decomposition reaction temperature range, and/or adjusting the residence time for the carbon compounds in the selected temperature region, wherein the carbon compounds to be selected are selected from the group consisting of alkanes or cycloalkanes such as methane, ethane, propanes, butanes, pentanes, hexanes, heptane, cyclopropane, cycrohexane, particularly, alkanes having 1 -7 carbon atoms; alkenes or cycloolefin such as ethylene, propylene, butylenes, pentenes, heptenes, cyclopentene, particularly, alkenes having 1-7 carbon atoms; alkynes such as acetylene, propyne, particularly, alkynes having 1 - 7 carbon atoms; aromatic or heteroaromatic hydorocarbons such as benzene, toluene, styrene, xylene, naphthalene, methyl naphtalene, indene, phenanthrene, particularly, aromatic or heteroaromatic hydorocarbons having 6 -18 carbon atoms; alcohols such as methanol, ethanol, particularly, alcohols having 1-7 carbon atoms; and other carbon compounds involving such as carbon monoxide, ketones, ethers. Further, to optimize the mixing ratio can contribute to the efficiency of the preparation.

When a combination of methane and benzene is utilized among such combinations of two or more carbon compounds, it is desirable that the molar ratio of methane/benzene is >1 - 600, preferably, 1.1 - 200, and more preferably 3 -100. The ratio is for the gas composition ratio at the inlet of the reaction furnace. For instance, when as one of carbon sources toluene is used, in consideration of the matter that 100% of the toluene decomposes into methane and benzene in proportions of 1:1 in the reaction furnace, only a deficiency of methane may be supplied separately. For example, in the case of adjusting the methane / benzene molar ratio to 3, 2 mol methane may be added to 1 mol toluene. As the methane to be added to the toluene, it is possible to use the methane which is contained as an unreacted form in the exhaust gas discharged from the reaction furnace, as well as a fresh methane specially supplied.

Using the composition ratio within such a range, it is possible to obtain the carbon fibrous structure in which both the carbon fiber parts and granular parts are efficiently developed.

Inert gases such as argon, helium, xenon; and hydrogen may be used as an atmosphere gas.

A mixture of transition metal such as iron, cobalt, molybdenum, or transition metal compounds such as ferrocene, metal acetate; and sulfur or a sulfur compound such as thiophene, ferric sulfide; may be used as a catalyst.

The intermediate may be synthesized using a CVD process with hydrocarbon or etc., which has been conventionally used in the art. The steps may comprise gasifying a mixture of hydrocarbon and a catalyst as a raw material, supplying the gasified mixture into a reaction furnace along with a carrier gas such as hydrogen gas, etc., and undergoing thermal decomposition at a temperature in the range of 800 °C - 1300 °C. By following such synthesis procedures, the product obtained is an aggregate, which is of several to several tens of centimeters in size and which is composed of plural carbon fibrous structures (intermediates), each of which has a three dimensional configuration where fibers having 15 - 100 nm in outside diameter are bound together by a granular part that has grown around the catalyst particle as the nucleus.

The thermal decomposition reaction of the hydrocarbon raw material mainly occurs on the surface of the catalyst particles or on growing surface of granular parts that have grown around the catalyst particles as the nucleus, and the fibrous growth of carbon may be achieved when the recrystallization of the carbons generated by the decomposition progresses in a constant direction. When obtaining carbon fibrous structures according to the present invention, however, the balance between the thermal decomposition rate and the carbon fiber growth rate is intentionally varied. Namely, for instance, as mentioned above, to use as carbon sources at least two kinds of carbon compounds having different decomposition temperatures may allow the carbonaceous material to grow three dimensionally around the granular part as a centre, rather than in one dimensional direction. The three dimensional growth of the carbon fibers depends not only on the balance between the thermal decomposition rate and the growing rate, but also on the selectivity of the crystal face of the catalyst particle, residence time in the reaction furnace, temperature distribution in the furnace, etc. The balance between the decomposition rate and the growing rate is affected not only by the kinds of carbon sources mentioned above, but also by reaction temperatures, and gas temperatures, etc. Generally, when the growing rate is faster than the decomposition rate, the carbon material tends to grow into fibers, whereas when the thermal decomposition rate is faster than the growing rate, the carbon material tends to grow in peripheral directions of the catalyst particle. Accordingly, by changing the balance between the thermal decomposition rate and the growing rate intentionally, it is possible to control the growth of carbon material to occur in multi-direction rather than in single direction, and to produce three dimensional structures that are related to the present invention. In order to form the above mentioned three-dimensional configuration, where the fibers are bound together by a granular part, with ease, it is desirable to optimize the compositions such as the catalyst used, the residence time in the reaction furnace, the reaction temperature and the gas temperature.

With respect to the method for preparing the carbon fibrous structure to be used in the present invention with efficiency, as another approach to the aforementioned one that two or more carbon compounds which have mutually different decomposition temperature are used in an appropriate mixing ratio, there is an approach that the raw material gas supplied into the reaction furnace from a supply port is forced to form a turbulent flow in proximity to the supply port. The "turbulent flow" used hereinmeans a furiously irregular flow, such as flow with vortexes.

In the reaction furnace, immediately after the raw material gas is supplied into the reaction furnace from the supply port, metal catalyst fine particles are produced by the decomposition of the transition metal compound as the catalyst involved in the raw material gas. The production of the fine particles is carried out through the following steps. Namely, at first, the transition metal compound is decomposed to make metal atoms, then, plural number of, for example, about one hundred of metal atoms come into collisions with each other to create a cluster. At the created cluster state, it can not function as a catalyst for the fine carbon fiber. Then, the clusters further are aggregated by collisions with each other to grow into a metal crystalline particle of about 3 - 10 nm in size, and which particle comes into use as the metal catalyst fine particle for producing the fine carbon fiber.

During the catalyst formation process as mentioned above, if the vortex flows belonging to the furiously turbulent flow are present, it is possible that the collisions of metal atoms or collisions of clusters become more vigorously as compared with the collisions only due to the Brownian movement of atoms or collisions, and thus the collision frequency per unit time is enhanced so that the metal catalyst fine particles are produced within a shorter time and with higher efficiency. Further, since concentration, temperature, etc. are homogenized by the force of vortex flow, the obtained metal catalyst fine particles become uniform in size. Additionally, during the process of producing metal catalyst fine particles, a metal catalyst particles' aggregate in which numerous metal crystalline particles was aggregated by vigorous collisions with the force of vortex flows can be also formed. Since the metal catalyst particles are rapidly produced as mentioned above, the decomposition of carbon compound can be accelerated so that an ample amount of carbonaceous material can be provided. Whereby, the fine carbon fibers grow up in a radial pattern by taking individual metal catalyst particles in the aggregate as nuclei. When the thermal decomposition rate of a part of carbon compounds is faster than the growing rate of the carbon material as previously described, the carbon material may also grow in the circumferential direction so as to form the granular part around the aggregate, and thus the carbon fiber structure of the desired three dimensional configuration may be obtained with efficiency. Incidentally, it may be also considered that there is a possibility that some of the metal catalyst fine particles in the aggregate are ones that have a lower activity than the other particles or ones that are deactivated on the reaction. If non-fibrous or very short fibrous carbon material layers grown by such catalyst fine particles before or after the catalyst fine particles aggregate are present at the circumferential area of the aggregate, the granular part of the carbon fiber structure to be used in the present invention may be formed.

The concrete means for creating the turbulence to the raw material gas flow near the supply port for the raw material gas is not particularly limited. For example, it is adaptable to provide some type of collision member at a position where the raw material gas flow introduced from the supply port can be interfered by the collision section. The shape of the collision section is not particularly limited, as far as an adequate turbulent flow can be formed in the reaction furnace by the vortex flow which is created at the collision section as the starting point. For example, embodiments where various shapes of baffles, paddles, tapered tubes, umbrella shaped elements, etc., are used singly or in varying combinations and located at one or more positions may be adaptable.

The intermediate, obtained by heating the mixture of the catalyst and hydrocarbon at a constant temperature in the range of 800 °C - 1300°C, has a structure that resembles sheets of carbon atoms laminated together, (and being still in a half-raw, or incomplete condition). When analyzed with Raman spectroscopy, the D band of the intermediate is very large and many defects are observed. Further, the obtained intermediate is associated with unreacted raw materials, nonfibrous carbon, tar moiety, and catalyst metal.

Therefore, the intermediate is subjected to a high temperature heat treatment at 2400 - 3000 °C using a proper method in order to remove such residues from the intermediate and to produce the intended carbon fibrous structure with few defects.

For instance, the intermediate may be heated at 800 - 1200 °C to remove the unreacted raw material and volatile flux such as the tar moiety, and thereafter annealed at a high temperature of 2400 - 3000 °C to produce the intended structure and, concurrently, to vaporize the catalyst metal, which is included in the fibers, to remove it from the fibers. In this process, it is possible to add a small amount of a reducing gas and carbon monoxide into the inert gas atmosphere to protect the carbon structures.

By annealing the intermediate at a temperature of 2400 - 3000 °C, the patch-like sheets of carbon atoms are rearranged to associate mutually and then form multiple graphene sheet-like layers.

After or before such a high temperature heat treatment, the aggregates may be subjected to crushing in order to obtain carbon fibrous structures, each having an area-based circle-equivalent mean diameter of several centimeters. Then, the obtained carbon fibrous structures may be subjected to pulverization in order to obtain the carbon fibrous structures having an area-based circle-equivalent mean diameter of 50 - 100 $\mu$m. It is also possible to perform the pulverization directly without crushing. On the other hand, the initial aggregates involving plural carbon fibrous structures to be used in the present invention may also be granulated for adjusting shape, size, or bulk density to one's suitable for using a particular application. More preferably, in order to utilize effectively the above structure formed from the reaction, the annealing would be performed in a state such that the bulk density is low (the state that the fibers are extended as much as they can and the voidage is sufficiently large). Such a state may contribute to improved electric conductivity of a resin matrix.

The carbon fibrous structures to be used the present invention may have the following properties:

A) a low bulk density;
B) a good dispersibility in a matrix such as resin;
C) a high electrical conductivity;
D) a high heat conductivity;
E) a good slidability;
F) a good chemical stability;
G) a high thermal stability; etc.

Thus, with enjoying such properties, the carbon fibrous structures can be used for preparing the carbon fibrous conjunct of the present invention which can be used in a wide range of applications.

The carbon fibrous conjunct according to the present invention is formed as a large bulky solid by adding a binder to the above mentioned carbon fibrous structures and mixing them so as to bind the carbon fibrous structures mutually, and then the bulky solid is subjected to molding into a suitable shape for usage, such as granules, sticks, or the like. The carbon fibrous conjunct thus obtained carries a high strength and a high density, as demonstrated with a tensile strength of not less than 2MPa, a specific surface area of not less than 20m$^2$/g, and a density of not less than 0.5g/cm$^3$. In the case of the granule form, the mean diameter and the density thereof will fall in a range of 0.03mm-5mm, and a range of 0.003-0.5g/cm$^3$, respectively, and thus the handling of the carbon fibrous conjuncts become easy as compared with that of the as-is status of carbon fibrous structures.

For instance, the carbon fibrous structures as mentioned above may be dispersed into a solution in which the binder is dissolved in water or an organic solvent, and then dried the resultant mixture, in order to obtain the fine carbon fibrous conjuncts where the carbon fibrous structures are ruggedly bound mutually. For improving the dispersibility, a high-shear mixer can be used preferably. An additive application of ultrasonic treatment after that can bring a further improvement of the dispersibility.

When obtaining granules, the fine carbon fibrous structures and the binder are mixed at the above mentioned ratio, and then the mixture is applied to a stirring type granulating machinery such as a Vertical Granulator (manufactured by POWLEX Co., Ltd.) or a stirring and rolling type granulating machinery such as granulating mixer.

The amount of the binder to be added to the fine carbon fibrous structures is in a range of 0.2 - 50 % by weight based on the total weight of the composite material after addition of the binder. Particularly, when the carbon fibrous conjuncts thus manufactured are used in a composition material, it is desirable that the amount is in the range of 0.2 -20 % by weight. When the carbon fibrous conjuncts are used as a electrode material, it is desirable that the amount is in the range of 2 -50 % by weight.

As the binder, for instance, starch, molasses, lactose, celluloses, cornstarches, gelatins, dextrins, agars, polyvinyl pyrrolidone, polyethylene glycols, polyvinyl alcohols, polyacrylates, polymethacrylates, sodium polyacrylates, phenolic resins, polyethylenes, polystyrenes, polyesters, polyamides, polyurethanes, and polytetra fluoroethylene, etc., can be enumerated. These binders can be used singly or in combination of two or more kinds. Incidentally, the above mentioned celluloses involves, for example, methyl cellulose, carboxy methyl cellulose, ethyl cellulose, hydroxy ethyl cellulose, and the hydroxy propyl cellulose, etc.

The carbon fibrous conjunct according to the present invention can be used as is, as an electrode for lithium battery, an electro-chemical capacitor, separator, absorption material, or the like.

Hereinafter, the case that the carbon fibrous conjunct is applied as an electrode of lithium battery will be illustrated.

The lithium battery is the battery which is equipped with an anode which includes an active material for ejecting lithium ions during discharge. The active material would be a metal lithium or a intercalation material capable of holding lithium ions between layers. Since lithium is the least base metal which has the smallest electrochemical equivalent and has a potential of -3.04 V, it can show the most prominent characteristic with respect to the anode of battery. Therefore, as for the primary batteries, the metallic lithium has been widely used.

However, it is not used for the secondary batteries still in full scale except the micro cells. It is because when lithium is deposited by charghing it grows dendritic rather than smoothly. Once such dendritic substance (dendrite) is deposited, not only a remarkable degression in the anode charging efficiency, but a short-circuit caused by penetration of the dendrite into a separator, and an accumulation of the dendritically deposited lithium which is isolated from the electrode, i.e., "dead lithium", can also happen. The dead lithium will bring a seriously worse problem to the safety. Further, in order to solve such a problems, Li-Al alloy and the like have been studied as the anode material. When such materials are used as the anode, however, some problems, such as degression of mechanical strength and deterioration of self-discharging property, will arise undesirably.

In contrast to the above cases, when the carbon fibrous conjunct according to the present invention is used for the electrode of the lithium battery, the specific surface area of the electrode can be enlarged, and therefore, the intercalation reaction of lithium ions can be promoted uniformly throughout the anode. Further, the creation of the dendrite can be reduced, while the improvements on the mechanical strength and the self-discharging property can be attained.

The anode of the lithium battery may be prepared by adding to the fine carbon fibrous structures a material for binding the fine carbon fibrous structures at an amount of 2 - 50 % by weight of total amount, dispersing the fine carbon fibrous structures uniformly into the binder, and then forming the mixture into sheets.

Incidentally, it is also possible to utilize the carbon fibrous conjuncts according to the present invention as the positive electrode of the lithium battery.

The carbon fibrous conjuncts according to the present invention can be used for manufacturing composite material by blending them into a varied matrix material.

Since the carbon fibrous conjunct according to the present invention is obtained by forming the above mentioned carbon fibrous structures into a prescribed shape with the aid of the binder, its handling on blending, etc., is particularly easy, as compared with that in the as-is status of the carbon fibrous structures, and that of the fine carbon fibers per se. Further, as mentioned above, since each carbon fibrous structures shows a three dimensional network configuration, and have elasticity, namely, a propensity to go back to an original shape after deformation, the carbon fibrous structures which are being in the aggregated condition in the carbon fibrous conjunct can be easily detached from each other when the conjunct is added to a matrix and the binder is dissolved into the matrix, and thus the detached carbon fibrous structures can be uniformly dispersed in the matrix such as resin. Therefore, the product's properties of the obtained composite material are superior ones.

Next, a composite material in which such carbon fibrous conjuncts are conbined will be described.

In the composite material the carbon fibrous conjuncts are prepared as above, typically, those in the granule form, are combined with a matrix.

As the matrix, organic polymers, inorganic materials, metals and so on can use desirably, and the organic polymers are most desirable.

For example, as organic polymer, various thermoplastic resins such as polypropylenes, polyethylenes, polystyrenes, polyvinyl chlorides, polyacetals, polyethylene terephthalates, polycarbonates, polyvinyl acetates, polyamides, polyamide imides, polyether imides, polyether ether ketones, polyvinyl alcohols, poly phenylene ethers, poly(meth) acrylates, and liquid crystal polymers; and various thermosetting resins such as epoxy resins, vinyl ester resins, phenol resins, unsaturated polyester resins, furan resins, imide resins, urethane resins, melamine resins, silicone resins and urea resins; as well as various elastmers such as natural rubber, styrene butadiene rubbers (SBR), butadiene rubbers (BR), polyisoprene rubbers (IR), ethylene-propylene rubbers (EPDM), nitrile rubbers (NBR), polychloroprene rubbers (CR), isobutylene isoprene rubbers (IIR), polyurethane rubbers, silicone rubbers, fluorine rubbers, acrylic rubbers (ACM), epichlorohydrin rubbers, ethylene acrylic rubbers, norbornene rubbers and thermoplastic elastomers; can be exemplified.

Further, the organic polymer may be in a varied form of composition such as adhesive, fibers, paint, ink, etc.

For example, that is, the matrix may be an adhesive agent such as epoxy type adhesive, acrylic type adhesive, urethane type adhesive, phenol type adhesive, polyester type adhesive, polyvinyl chloride type adhesive, urea type adhesive, melamine type adhesive, olefin type adhesive, acetic acid vinyl type adhesive, hotmelt type adhesive, cyano acrylate type adhesive, rubber type adhesive, cellulose type adhesive, etc. ; fibers such as acrylic fibers, acetate fibers, aramid fiber, nylon fibers, novoloid fibers, cellulose fibers, viscose rayon fibers, vinylidene fibers, vinylon fibers, fluorine fibers, polyacetal fibers, polyurethane fibers, polyester fibers, polyethylene fibers, polyvinyl chloride fibers, polypropylene fibers, etc.; or a paint or ink such as phenol resin type, alkyd type, epoxy type, acrylic resin type, unsaturated polyester type, polyurethane type, silicon type, fluorine resin type, synthetic resin emulsion type, etc.

For example, as the inorganic material, ceramic materials and inorganic oxide polymers can be enumerated. As preferable concrete examples, carbon material such as carbon-carbon composite, glass, glass fiber, flat glass and the other forming glass, silicate ceramics and other heat resisting ceramics, e.g. aluminum oxide, silicon carbide, magnesium oxide, silicone nitride and boron nitride may be included.

Also, when the matrix is metal, as preferable metals, aluminum, magnesium, lead, copper, tungsten, titanium, niobium, hafnium, vanadium, and alloys and mixtures thereof can be enumerated.

Moreover, in the composite material it is possible to include the other filling agent in addition to the above mentioned carbon fibrous conjuncts. As such filling agent, metallic minute particles, silica, calcium carbonate, magnesium carbonate, carbon black, glass fibers, carbon fibers can be enumerated, and respective agents may be used singly or in any combination of two or more agents.

The composite material includes the aforementioned carbon fibrous conjuncts at an effective amount in the matrix as mentioned above. Although the amount depends on the intended usage of the composite material and the kind of the matrix used, but the amount would be typically in the range of about 0.1 to about 30 % by weight based on the total weight of the composite material. At less than 0.1 % by weight, the carbon fibrous conjuncts may be less effective in providing enhancement in the mechanical strength for the structural material and enhancement in the electric conductivity. At more than 30% by weight, the mechanical strength may be degraded and the adhesive property of such as the paint, the adhesive, etc., become worse.

As composite material in which granules of the carbon fibrous conjuncts are used, for instance, shell and exterior of automobile, sporting goods, housings, trays, carriers, etc., can be enumerated.

In such applications, the granules are fused and mixed to a desired resin such as organic polymer, inorganic material, or metal, for instance, by using a biaxial extruder, in order to prepare pellets in which the carbon fibrous structures are uniformly dispersed. Then, the pellets may be applied to a injection molding machine in order to form a prescribed shape of product, such as bumper shape.

Further, concrete examples of composite material will be enumerated as follows, in their respective groups classified according to the intended function of the carbon fibrous structures included therein.

1) One which utilizes electric conductivity

For example, by combining the conjuncts with a resin, the resultant conductive resin and conductive resin molded body can be suitably used for wrapping material, gasket, container, resistance body, conductive fiber, electric wire, adhesive, ink, paint, etc. Similar effect can be expected to the composite materials in which the conjuncts are added to an inorganic material, particularly, ceramic, metal, etc., in addition to the above mentioned composite with resin.

2) One which utilizes heat conductivity

It is possible to use it to the same applications as the above electric conductivity utilized case.

3) One which utilizes electromagnetic wave shielding ability

By blending the conjuncts to a resin, the resultant composite material can be suitably used as electromagnetic wave shielding paint as well as electromagnetic wave shielding material with undergoing molding.

4) One which utilizes a physical characteristic

By blending the conjuncts to a matrix such as resin or metal in order to improve the sliding ability of the matrix, the resultant composite material can be used for roll, brake parts, tire, bearing, lubricating oil, cogwheel, pantograph, etc.

Also, by taking advantage of their light-weight and toughnesss, it can be used for wire, bodies of consumer electronics or cars or airplanes, housing of machines, etc.

Additionally, it is possible to use as the substitution of the conventional carbon fiber or beads, and it may apply to polar material of battery, switch, vibration damper, etc.

5) One which utilizes a filler characteristic

The fine carbon fibers included in the carbon fibrous structure have excellent strength and flexibility, and thus the filler characteristic to compose network structure is excellent. By using this characteristic, it is possible to contribute to strengthen the pole of energy device such as lithium ion rechargeable battery, lead storage battery, capacitor, and fuel cell, and to improve the cycle characteristic of the energy device.

In the composite material the fine carbon fibers can disperse themselves uniformly throughout the matrix even when the carbon fibrous conjuncts are added in a relative small amount, and as described above, the composite material which is useful as a functional material bearing good electric conductivity, electric wave shielding ability, heat conductivity, etc., as a structural material having a high strength, or the like., can be obtained.

EXAMPLES

Hereinafter, this invention will be illustrated in detail by practical examples. However, it is to be understood that the examples are given for illustrative purpose only, and the invention is not limited thereto.

The respective physical properties illustrated later are measured by the following protocols.

<Area based circle-equivalent mean diameter>

First, a photograph of pulverized product was taken with SEM. On the taken SEM photo, only carbon fibrous structures with a clear contour were taken as objects to be measured, and broken ones with unclear contours were omitted. Using all carbon fibrous structures that can be taken as objects in one single field of view (approximately, 60 - 80 pieces), about 200 pieces in total were measured with three fields of views. Contours of the individual carbon fibrous structures were traced using the image analysis software, WinRoof™ (trade name, marketed by Mitani Corp.), and area within each individual contour was measured, circle-equivalent mean diameter of each individual carbon fibrous structure was calculated, and then, the calculated data were averaged to determine the area based circle-equivalent mean diameter.

<Measurement of Bulk density>

1 g of powder was placed into a 70 mm caliber transparent cylinder equipped with a distribution plate, then air supply at 0.1 Mpa of pressure, and 1.3 liter in capacity was applied from the lower side of the distribution plate in order to blow off the powder and thereafter allowed the powder to settle naturally. After the fifth air blowing, the height of the settled powder layer was measured. Any 6 points were adopted as the measuring points, and the average of the 6 points was calculated in order to determine the bulk density.

<Raman spectroscopic analysis>

The Raman spectroscopic analysis was performed with the equipment LabRam 800 manufactured by HORIBA JOBIN YVON, S.A.S., and using 514 nm the argon laser.

<TG combustion temperature>

Combustion behavior was determined using TG-DTA manufactured by MAX SCIENCE CO. LTD., at air flow rate of 0.1 liter/minute and heating rate of 10 °C/minute. When burning, TG indicates a quantity reduction and DTA indicates an exothermic peak. Thus, the top position of the exothermic peak was defined as the combustion initiation temperature.

<X ray diffraction>

Using the powder X ray diffraction equipment (JDX3532, manufactured by JEOL Ltd.), carbon fibrous structures after annealing processing were examined. K$\alpha$ ray which was generated with Cu tube at 40 kV, 30 mA was used, and the measurement of the spacing was performed in accordance with the method defined by The Japan Society for the Promotion of Science (JSPS), described in "Latest Experimental Technique For Carbon Materials (Analysis Part)", Edited by Carbon Society of Japan, 2001), and as the internal standard silicon powder was used.

<Particle's resistance and decompressibility>

1 g of CNT powder was scaled, and then press-loaded into a resinous die (inner dimensions: 40 L, 10 W, 80 H (mm)), and the displacement and load were read out. A constant current was applied to the powder by the four-terminal method, and in this condition the voltage was measured. After measuring the voltage until the density come to 0.9g/cm$^3$, the applied pressure was released and the density after decompression was measured. Measurements taken when the powder was compressed to 0.5, 0.8 or 0.9 g/cm$^3$ were adopted as the particle's resistance.

<Mean diameter and roundness of the granular part, and ratio of the granular part to the fine carbon fiber>

First, a photograph of the carbon fibrous structures was taken with SEM in an analogous fashion as in the measurement of area based circle-equivalent mean diameter. On the taken SEM photo, only carbon fibrous structures with a clear contour were taken as objects to be measured, and broken ones with unclear contours were omitted. Using all carbon fibrous structures that can be taken as objects in one single field of view (approximately, 60 - 80 pieces), about 200 pieces in total were measured with three fields of views.

On the carbon fibrous structures to be measured, assuming each individual granular part which is the binding point of carbon fibers to be a particle, contours of the individual granular parts were traced using the image analysis software, WinRoof™ (trade name, marketed by Mitani Corp.), and area within each individual contour was measured, circle-equivalent mean diameter of each individual granular part was calculated, and then, the calculated data were averaged to determine the area based circle-equivalent mean diameter. Roundness (R) was determined by inputting value of the area(A) within each individual contour computed by the above and a measured value of each individual contour's length (L) to the following equation to calculate the roundness of each individual granular part, and then, averaging the calculated data.

$$R \;=\; A \;*\; 4\pi \;/\; L^2$$

Further, the outer diameter of the fine carbon fibers in the individual carbon fibrous structures to be measured were determined, and then, from the outer diameter determined and the circle-equivalent mean diameter of the granular part calculated as above, the ratio of circle-equivalent mean diameter to the outer diameter of the fine carbon fiber was calculated for each individual carbon fibrous structure, and then the data obtained are averaged.

<Mean distance between granular parts>

First, a photograph of the carbon fibrous structures was taken with SEM in an analogous fashion as in the measurement of area based circle-equivalent mean diameter. On the taken SEM photo, only carbon fibrous structures with a clear contour were taken as objects to be measured, and broken ones with unclear contours were omitted. Using all carbon fibrous structures that can be taken as objects in one single field of view (approximately, 60 - 80 pieces), about 200 pieces in total were measured with three fields of views.

On the carbon fibrous structures to be measured, all places where the granular parts were mutually linked with a fine carbon fiber were found out. Then, at the respective places, the distance between the adjacent granular parts which were mutually linked with the fine carbon fiber (the length of the fine carbon fiber including the center of a granular part at one end to the center of another granular part at another end) was measured, and then the data obtained were averaged.

<Destruction test for carbon fibrous structure>

To 100ml of toluene in a lidded vial, the carbon fiber structures were added at a ratio of 30 $\mu$g/ml in order to prepare the dispersion liquid sample of the carbon fibrous structure.

To the dispersion liquid sample of the carbon fibrous structure thus prepared, Ultrasound was applied using a ultrasonic cleaner (manufactured by SND Co., Ltd., Trade Name: USK-3) of which generated frequency was 38 kHz and power was 150 w, and the change of the carbon fibrous structure in the dispersion liquid was observed in the course of time aging.

First, 30 minutes after the application of ultrasound was started, a 2 ml constant volume aliquot of the dispersion sample was pipetted, and the photo of the carbon fibrous structures in the aliquot was taken with SEM. On the obtained SEM photo, 200 pieces of fine carbon fibers in the carbon fibrous structures (fine carbon fibers at least one end of which is linked to the granular part) were selected randomly, then the length of the each individual selected fine carbon fibers was measured, and mean length $D_{50}$ was calculated. The mean length calculated is taken as the initial average fiber length.

Meanwhile, on the obtained SEM photo, 200 pieces of granular parts which each were the binding point of carbon fibers in the carbon fibrous structures were selected randomly. Assuming each individual selected granular part to be a particle, contours of the individual granular parts were traced using the image analysis software, WinRoof™ (trade name, marketed by Mitani Corp.), and area within each individual contour was measured, circle-equivalent mean diameter of each individual granular part was calculated, and then, $D_{50}$ mean value thereof is calculated. The $D_{50}$ mean value calculated was taken as the initial average diameter of the granular parts.

Thereafter, according to the same procedure, a 2 ml constant volume aliquot of the dispersion sample was pipetted every constant periods, and the photo of the carbon fibrous structures in the each individual aliquot was taken with SEM, and the mean length $D_{50}$ of the fine carbon fibers in the carbon fibrous structure and the mean diameter $D_{50}$ of the granular part in the carbon fibrous structure were calculated individually.

At the time when the mean length $D_{50}$ of the fine carbon fibers comes to be about half the initial average fiber length (in the following Examples, 500 minutes after the application of ultrasound is stated.), the mean diameter $D_{50}$ of the granular part was compared with the initial average diameter of the granular parts in order to obtain the rate of variability (%) thereof.

<Surface resistivity>

In a obtained specimen, using 4-pin probe type low resistivity meter (LORESTA-GP, manufactured by Mitsubishi Chemical), the resistance (Q) at nine points of coated film surface was measured, then the measured values were converted into those of surface resistivity ($\Omega/cm^2$), and then average was calculated.

Synthetic Example 1

By the CVD process, carbon fibrous structures were synthesized from toluene as the raw material.

The synthesis was carried out in the presence of a mixture of ferrocene and thiophene as the catalyst, and under the reducing atmosphere of hydrogen gas. Toluene and the catalyst were heated to 380°C along with the hydrogen gas, and then they were supplied to the generation furnace, and underwent thermal decomposition at 1250°C in order to obtain the carbon fibrous structures (first intermediate).

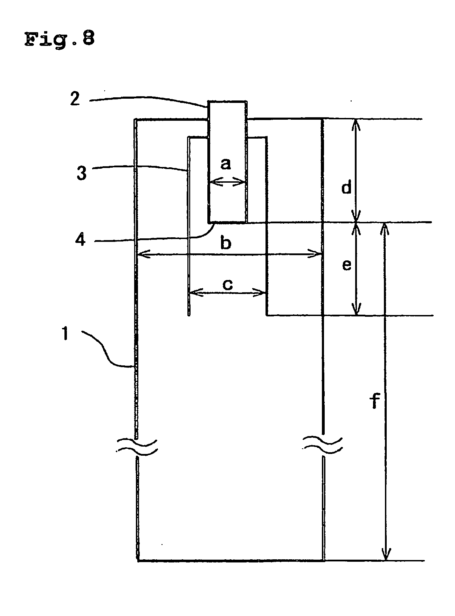

The generation furnace used for the carbon fibrous structures (first intermediate) is illustrated schematically in Fig. 8. As shown in Fig. 8, the generation furnace 1 was equipped at the upper part thereof with a inlet nozzle 2 for introducing the raw material mixture gas comprising toluene, catalyst and hydrogen gas as aforementioned into the generation furnace 1. Further, at the outside of the inlet nozzle 2, a cylindrical-shaped collision member 3 was provided. The collision member 3 was set to be able to interfere in the raw material gas flow introduced from the raw material supply port 4 located at the lower end of the inlet nozzle 2. In the generation furnace 1 used in this Example, given that the inner diameter of the inlet nozzle 2, the inner diameter of the generation furnace 1, the inner diameter of the cylindrical-shaped collision member 3, the distance from the upper end of the generation furnace 1 to the raw material mixture gas supply port 4, the distance from the raw material mixture gas supply port 4 to the lower end of the collision member 3, and the distance from the raw material mixture gas supply port 4 to the lower end of the generation furnace 1 were "a", "b", "c", "d", "e", and "f", respectively, the ratio among the above dimensions was set as a:b:c:d:e:f = 1.0:3.6:1.8:3.2:2.0: 21.0. The raw material gas supplying rate to the generation furnace was 1850 NL/min., and the pressure was 1.03 atms.

The synthesized first intermediate was baked at 900 °C in nitrogen gas in order to remove hydrocarbons such as tar and to obtain a second intermediate. The R value of the second intermediate measured by the Raman spectroscopic analysis was found to be 0.98. Sample for electron microscopes was prepared by dispersing the first intermediate into toluene. Figs. 1 and 2 show SEM photo and TEM photo of the sample, respectively.

Further, the second intermediate underwent a high temperature heat treatment at 2600 °C. The obtained aggregates of the carbon fibrous structures underwent pulverization using an air flow pulverizer in order to produce the carbon fibrous structures to be used in the present invention.

A sample for electron microscopes was prepared by dispersing ultrasonically the obtained carbon fibrous structures into toluene. Figs 3, and 4 show SEM photo and TEM photos of the sample, respectively.

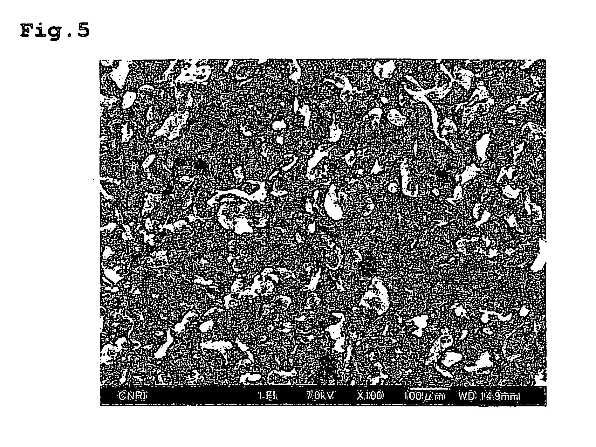

Fig. 5 shows SEM photo of the obtained carbon fibrous structures as mounted on a sample holder for electron microscope, and Table 1 shows the particle distribution of obtained carbon fibrous structures.

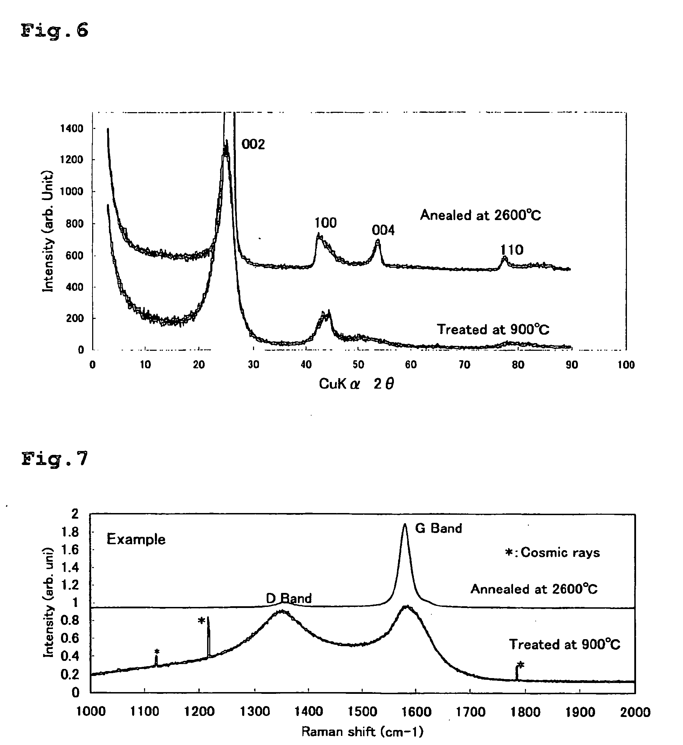

Further, X-ray diffraction analysis and Raman spectroscopic analysis were performed on the carbon fibrous structure before and after the high temperature heat treatment in order to examine changes in these analyses. The results are shown in Figs. 6 and 7, respectively.

Additionally, it was found that the carbon fibrous structures had an area based circle-equivalent mean diameter of 72.8 $\mu$m, bulk density of 0.0032 g/cm$^3$, Raman $I_D/I_G$ ratio of 0.090, TG combustion temperature of 786 °C, spacing of 3.383 A, particle's resistance of 0.0083 $\Omega \cdot$cm, and density after decompression of 0.25 g/cm$^3$.

The mean diameter of the granular parts in the carbon fibrous structures was determined as 443 nm (SD 207 nm), that is 7.38 times larger than the outer diameter of the carbon fibers in the carbon fibrous structure. The mean roundness of the granular parts was 0.67 (SD 0.14).

Further, when the destruction test for carbon fibrous structure was performed according to the above mentioned procedure, the initial average fiber length ($D_{50}$) determined 30 minutes after the application of ultrasound was started was found to be 12.8 $\mu$m, while the mean length $D_{50}$ determined 500 minutes after the application of ultrasound was started was found to be 6. 7 $\mu$m, which value was about half the initial value. This result showed that many breakages were given in the fine carbon fibers of the carbon fibrous structure. Whereas the variability (decreasing) rate for the diameter of granular part was only 4.8%, when the mean diameter ($D_{50}$) of the granular part determined 500 minutes after the application of ultrasound was started was compared with the initial average diameter ($D_{50}$) of the granular parts determined 30 minutes after the application of ultrasound was started. Considering measurement error, etc., it was found that the granular parts themselves were hardly destroyed even under the load condition that many breakages were given in the fine carbon fibers, and the granular parts still function as the binding site for the fibers mutually.

Tables 1 and 2 provides a summary of the various physical properties as determined in Synthetic Example 1.

[Table 1]

| Particle Distribution (pieces) | Synthetic Example 1 |
|---|---|
| <50 $\mu$m | 49 |
| 50 $\mu$m to <60 $\mu$m | 41 |
| 60 $\mu$m to 70 $\mu$m | 34 |
| 70 $\mu$m to <80 $\mu$m | 32 |
| 80 $\mu$m to <90 $\mu$m | 16 |
| 90 $\mu$m to <100 $\mu$m | 12 |
| 100 $\mu$m to <110 $\mu$m | 7 |
| >110 $\mu$m | 16 |
| Area based circle-equivalent mean diameter | 72.8 $\mu$m |

[Table 2]

| | Synthetic Example 1 |
|---|---|
| Area based circle-equivalent mean diameter | 72.8 $\mu$m |
| Bulk density | 0.0032g/cm$^3$ |
| $I_D/I_G$ ratio | 0.090 |
| TG combustion temperature | 786°C |
| Spacing for (002) faces | 3.383A |
| Particle's resistance at 0.5 g/cm$^3$ | 0.0173$\Omega \cdot$cm |
| Particle's resistance at 0.8 g/cm$^3$ | 0.0096$\Omega \cdot$cm |
| Particle's resistance at 0.9 g/cm$^3$ | 0.0083$\Omega \cdot$cm |

(continued)

|  | Synthetic Example 1 |
| --- | --- |
| Density after decompression | 0.25g/cm$^3$ |

Synthetic Example 2

By the CVD process, carbon fibrous structures were synthesized using a part of the exhaust gas from the generation furnace as a recycling gas in order to use as the carbon source the carbon compounds such as methane, etc., included in the recycling gas, as well as a fresh toluene.

The synthesis was carried out in the presence of a mixture of ferrocene and thiophene as the catalyst, and under the reducing atmosphere of hydrogen gas. Toluene and the catalyst as a fresh raw material were heated to 380°C along with the hydrogen gas in a preheat furnace, while a part of the exhaust gas taken out from the lower end of the generation furnace was used as a recycling gas. After it was adjusted to 380 °C, it was mixed with the fresh raw material gas on the way of the supplying line for the fresh raw material to the generation furnace. The mixed gas was then supplied to the generation furnace.

The composition ratio in the recycling gas used were found to be $CH_4$ 7.5%, $C_6H_6$ 0.3%, $C_2H_2$ 0.7%, $C_2H_6$ 0.1%, CO 0.3%, $N_2$ 3.5%, and $H_2$ 87.6% by the volume based molar ratio. The mixing flow rate was adjusted so that the mixing molar ratio of methane and benzene in the raw material gas to be supplied to the generation furnace, $CH_4/C_6H_6$ was set to 3.44 (wherein, it was considered that the toluene in the fresh raw material gas had been decomposed at 100% to $CH_4:C_6H_6 = 1:1$ by the heating in the preheat furnace.

In the final raw material gas, $C_2H_2$, $C_2H_6$, and CO which were involved in the recycling gas to be mixed were naturally included. However, since these ingredients were very small amount, they may substantially be ignored as the carbon source.

Then they were underwent thermal decomposition at 1250 °C in order to obtain the carbon fibrous structures (first intermediate) in an analogous fashion as Synthetic Example 1.

The constitution of the generation furnace used for the carbon fibrous structures (first intermediate) was the same as that shown in Fig.8, except that the cylindrical- shaped collision member 3 was omitted. The raw material gas supplying rate to the generation furnace was 1850 NL/min., and the pressure was 1.03 atms as in the case of Synthetic Example 1.

The synthesized first intermediate was baked at 900 °C in argon gas in order to remove hydrocarbons such as tar and to obtain a second intermediate. The R value of the second intermediate measured by the Raman spectroscopic analysis was found to be 0.83. Sample for electron microscopes was prepared by dispersing the first intermediate into toluene. SEM photo and TEM photo obtained for the sample are in much the same with those of Synthetic Example 1 shown in Figs. 1 and 2, respectively.

Further, the second intermediate underwent a high temperature heat treatment at 2600 °C in argon gas. The obtained aggregates of the carbon fibrous structures underwent pulverization using an air flow pulverizer in order to produce the carbon fibrous structures to be used in the present invention.

A sample for electron microscopes was prepared by dispersing ultrasonically the obtained carbon fibrous structures into toluene. SEM photo and TEM photo obtained for the sample are in much the same with those of Synthetic Example 1 shown in Figs. 3 and 4, respectively.

Separately, the obtained carbon fibrous structures were mounted on a sample holder for electron microscope, and observed for the particle distribution. The obtained results are shown in Table 3.

Further, X-ray diffraction analysis and Raman spectroscopic analysis were performed on the carbon fibrous structure before and after the high temperature heat treatment in order to examine changes in these analyses. The results are in much the same with those of Synthetic Example 1 shown in Figs. 6 and 7, respectively.

Additionally, it was found that the carbon fibrous structures had an area based circle-equivalent mean diameter of 75.8 $\mu$m, bulk density of 0.004 g/cm$^3$, Raman $I_D/I_G$ ratio of 0.086, TG combustion temperature of 807 °C, spacing of 3.386 A, particle's resistance of 0.0077 $\Omega$·cm, and density after decompression of 0.26 g/cm$^3$.

The mean diameter of the granular parts in the carbon fibrous structures was determined as 349.5 nm (SD 180.1 nm), that is 5.8 times larger than the outer diameter of the carbon fibers in the carbon fibrous structure. The mean roundness of the granular parts was 0.69 (SD 0.15).

Further, when the destruction test for carbon fibrous structure was performed according to the above mentioned procedure, the initial average fiber length ($D_{50}$) determined 30 minutes after the application of ultrasound was started was found to be 12.4 $\mu$m, while the mean length $D_{50}$ determined 500 minutes after the application of ultrasound was started was found to be 6.3 $\mu$m, which value was about half the initial value. This result showed that many breakages were given in the fine carbon fibers of the carbon fibrous structure. Whereas the variability (decreasing) rate for the diameter of granular part was only 4.2%, when the mean diameter ($D_{50}$) of the granular part determined 500 minutes after the application of ultrasound was started was compared with the initial average diameter ($D_{50}$) of the granular parts determined 30 minutes after the application of ultrasound was started. Considering measurement error, etc., it was found that the granular parts themselves were hardly destroyed even under the load condition that many breakages were given in the fine carbon, and the granular parts still function as the binding site for the fibers mutually.

Tables 3 and 4 provide a summary of the various physical properties as determined in Example 2.

[Table 3]

| Particle Distribution (pieces) | Synthetic Example 2 |
|---|---|
| <50 $\mu$m | 48 |
| 50 $\mu$m to <60 $\mu$m | 39 |
| 60 $\mu$m to 70 $\mu$m | 33 |
| 70 $\mu$m to <80 $\mu$m | 30 |
| 80 $\mu$m to <90 $\mu$m | 12 |
| 90 $\mu$m to <100 $\mu$m | 15 |
| 100 $\mu$m to <110 $\mu$m | 3 |
| >110 $\mu$m | 18 |
| Area based circle-equivalent mean diameter | 75.8 $\mu$m |

[Table 4]

| | Synthetic Example 2 |
|---|---|
| Area based circle-equivalent mean diameter | 75.8 $\mu$m |
| Bulk density | 0.004g/cm$^3$ |
| $I_D/I_G$ ratio | 0.086 |
| TG combustion temperature | 807°C |
| Spacing for (002) faces | 3.386 A |
| Particle's resistance at 0.5 g/cm$^3$ | 0.0161$\Omega$·cm |
| Particle's resistance at 0.8 g/cm$^3$ | 0.0089$\Omega$·cm |
| Particle's resistance at 0.9 g/cm$^3$ | 0.0077$\Omega$·cm |
| Density after decompression | 0.26g/cm$^3$ |

Example 1

As raw materials, the fine carbon fibrous structures obtained from Synthetic Example 1, methanol, water, and methyl cellulose were mixed in a mixing ratio of carbon fibrous structures : methanol : water : methyl cellulose = 20:20: 9:1, and the resultant mixture was subjected to granulation by using a Vertical Granulator (manufactured by POWLEX Co., Ltd.) for 15 minutes. After the granulation, the prepared granules were dried at a temperature of not less than 100°C in order to remove methanol and water. Thereby, granules of the carbon fibrous structures having a mean diameter of 500 $\mu$m were prepared.

Examples 2 - 6

Epoxy type adhesive compositions were prepared according to the prescriptions shown in table 5, by blending the carbon fibrous granules obtained in Example 1, to an epoxy resin (ADEKA RESIN™, manufactured by Asahi Denka Co., Ltd.) and a hardener (ADEKA HARDENER™, manufactured by Asahi Denka Co., Ltd.), and then kneading them with a rotation - revolution type centrifugal mixer (Awatori-NERITARO AR-250, manufactured by Thinky Co., Ltd.) for ten minutes.

The epoxy type adhesive composition thus obtained was developed on a glass plate using an applicator with a coating width of 100 mm and gap of 200 $\mu$m. The coated film was then hardened at 170 °C for 30 minutes to obtain hardened film, and the hardened film was cut up into 50 mm x 50 mm pieces to obtain test pieces. Using the test pieces, the surface resistivity was determined. The results obtained were shown in Table 5.

Example 7

Granules of carbon fibrous structures having a mean diameter of 500 $\mu$m were prepared in a similar manner as Example 1, except that as the raw material the fine carbon fibrous structures obtained from synthetic Example 2 were used instead of those obtained from synthetic Example 1.

Examples 8 - 12

Epoxy type adhesive compositions were prepared in a similar manner as Examples 2 -6, except that the carbon fibrous granules obtained from Example 2 were used instead of those obtained from Example 1, and the surface resistivity of the hardened films of the adhesive compositions were determined. As the result, the values of surface resistivity of Examples 8 -12 are in much the same with those of Examples 2 - 6, in accordance with the added amount of the carbon fibrous granules.

Controls 1 - 6

Epoxy type adhesive compositions were prepared according to the prescriptions shown in table 6, by blending carbon black (#3350B, manufactured by Mitsubishi Chemical), to an epoxy resin (ADEKA RESIN™, manufactured by Asahi Denka Co., Ltd.) and a hardener (ADEKA HARDENER™, manufactured by Asahi Denka Co., Ltd.), and then kneading them with a rotation - revolution type centrifugal mixer (Awatori-NERITAROAR-250, manufactured by Thinky Co., Ltd.) for ten minutes.

The epoxy type adhesive composition thus obtained was elevated by the same manners in Example 2. The results are shown in Table 6.

[Table 5]

| | Example | | | | |
|---|---|---|---|---|---|
| | 2 | 3 | 4 | 5 | 6 |
| EP-4100E | 100 | 100 | | 100 | |
| EP-4901E | | | 100 | | 100 |
| Carbon fibrous structures | 1.2 | 2.4 | 3.6 | 4.7 | 6.9 |
| EH-3636AS | 8 | 8 | 8 | | |
| EH-4339S | | | | 20 | 20 |
| Surface resistivity ($\Omega$/cm$^2$) | 4.98 7 x 10$^4$ | 1.98 x 10$^3$ | 8.09 7 x 10$^2$ | 2.64 5 x 10$^2$ | 1.44 1 x 10$^2$ |

EP-4100E : "ADEKA RESIN" EP-4100E, manufactured by Asahi Denka Co., Ltd.; Bisphenol A type epoxy resin, epoxy equivalent: 190
EP-4901E : "ADEKA RESIN" EP-4901E , manufactured by Asahi Denka Co., Ltd.; Bisphenol F type epoxy resin, epoxy equivalent: 170
EH-3636AS : "ADEKA HARDENER" manufactured by Asahi Denka Co. , Ltd.; Dicyandiamide
EH-4339S : "ADEKA HARDENER" manufactured by Asahi Denka Co. , Ltd.; Aliphatic polyamine type hardener

[Table 6]

| | Control | | | | | |
|---|---|---|---|---|---|---|
| | 1 | 2 | 3 | 4 | 5 | 6 |
| EP-4100E | 100 | 100 | 100 | 100 | | |
| EP-4901E | | | | | 100 | 100 |
| Carbon black | 6.9 | 9.3 | 12.2 | 15.6 | 18.8 | 21.7 |
| EH-3636AS | 8 | 8 | 8 | 8 | 8 | 8 |
| Surface resistivity ($\Omega$/cm$^2$) | $6.816 \times 10^4$ | $4.787 \times 10^4$ | $1.833 \times 10^4$ | $6.623 \times 10^3$ | $3.323 \times 10^3$ | $1.358 \times 10^3$ |
| EP-4100E : "ADEKA RESIN" EP-4100E, manufactured by Asahi Denka Co., Ltd.; Bisphenol A type epoxy resin, epoxy equivalent: 190<br>EP-4901E : "ADEKA RESIN" EP-4901E, manufactured by Asahi Denka Co., Ltd.; Bisphenol F type epoxy resin, epoxy equivalent: 170<br>EH-3636AS : "ADEKA HARDENER" manufactured by Asahi Denka Co. , Ltd.; Dicyandiamide | | | | | | |

As clear from Examples, the adhesives, in which as conductivity improving agent the carbon fibrous conjuncts (carbon fibrous granules) according to the present invention were used, indicate a surface resistivity in the order of $10^3$ $\Omega$/cm$^2$ with an additive amount of 2 % by weight, and in the order of to $10^2$ Q/cm$^2$ with an additive amount of 7 % by weight, whereas in the types using carbon black, it was improved as little as $10^3$ $\Omega$/cm$^2$ order even when the additive amount reaches 20 % by weight. Further, with respect to the carbon black, since it is necessary to add it in high amounts as compared with the carbon fibrous conjuncts, the resultant adhesives are compelled to have an unnecessary thickened melt viscosity and deteriorated physical properties. Using the carbon fibrous conjuncts, such defects can be disappeared and the great improvement in the electrical conductivity can be attained, and the electrical conductivity can be rendered uniformly throughout the membrane.

## Claims

1. Carbon fibrous conjunct which consists of carbon fibrous structures and a binder by which the carbon fibrous structures are bound together,
   wherein each of the carbon fibrous structures is synthesized by CVD process which
   comprises gasifying a mixture of carbon compound and a catalyst as a raw material, supplying the gasified mixture into a reaction furnace along with a carrier gas, and allowing the hydrocarbon to thermal decomposition at 800°C - 1300°C, wherein as the carbon compound at least two carbon compounds which have different decomposition temperatures are used and/or the gasified mixture supplied into the reaction furnace from a supply port is forced to form a turbulent flow in proximity to the supply port, and wherein each of the carbon fibrous structures comprises a three dimensional network of carbon fibers each having an outside diameter of 15 - 100 nm, wherein the carbon fibrous structure further comprises a granular part with which the carbon fibers are bound in the state that the carbon fibers extend outwardly from the granular part, and wherein the granular part is produced in a growth process of the carbon fibers and a particle diameter of the granular part is 1.3 times or more larger than outside diameters of the carbon fibers, on average;
   wherein the $I_D/I_G$ ratio of the carbon fibrous structures determined by Raman spectroscopy is not more than 0.2; and
   wherein the binder is added at an amount in the range of 0.2 - 50 % by weight.

2. Carbon fibrous conjunct according to Claim 1, wherein the carbon fibrous structures have an area based circle-equivalent mean diameter of 50 - 100 $\mu$m.

3. Carbon fibrous conjunct according to Claim 1 or 2, wherein the carbon fibrous structures have a bulk density of 0.0001 - 0.05g/cm$^3$.

4. Carbon fibrous conjunct according to one of Claims 1 - 3, wherein the carbon fibrous structures have a combustion initiation temperature in air of not less than 750°C.

5. Carbon fibrous conjunct according to one of Claims 1 - 4, wherein the carbon fibrous structures are produced using as carbon sources at least two carbon compounds which have different decomposition temperatures.

**Patentansprüche**

1. Carbonfaserkonjugat, das aus Carbonfaserstrukturen und einem Bindemittel besteht, durch das die Carbonfaserstrukturen miteinander verbunden werden, wobei jede der Caebonfaserstrukturen mit Hilfe eines CVD-Prozesses synthetisiert wird, der das Verdampfen einer Mischung aus Kohlenstoffverbindung und einem Katalysator, der das Verdampfen von Kohlenstoffverbindung und einem Katalysator als einem Rohstoff, das Einleiten der verdampften Mischung in einen Reaktionsofen zusammen mit einem Trägergas und das Erlauben einer thermischen Zersetzung des Kohlenwasserstoffs bei 800°C - 1300°C umfasst, wobei mindestens zwei Kohlenstoffverbindungen mit unterschiedlichen Zersetzungstemperaturen als die Kohlenstoffverbindung verwendet werden und/oder die in den Reaktionsofen von einem Einleitungsanschluss eingeleitete verdampfte Mischung gezwungen wird, in der Nähe des Einleitungsanschlusses eine turbulente Strömung zu bilden, und wobei jede der Carbonfaserstrukturen ein dreidimensionales Netzwerk aus Carbonfasern mit einem Außendurchmesser von jeweils 15 - 100 nm umfasst, wobei die Carbonfaserstrukturen darüber hinaus einen Granulatanteil umfassen, mit dem die Carbonfasern in dem Zustand gebunden sind, in dem die Carbonfasern sich von dem Granulatanteil ausgehend nach außen erstrecken, und wobei der Granulatanteil in einem Wachstumsprozess der Carbonfasern produziert wird und einen Teilchendurchmesser aufweist, der im Durchschnitt um das 1,3- oder mehrfache größer als der Außendurchmesser der Carbonfasern ist, wobei das mittels Raman-Spektroskopie ermittelte Verhältnis $I_D/I_G$ der Carbonfaserstrukturen nicht mehr als 0,2 beträgt, und
   wobei das Bindemittel in einer Menge im Bereich von 0,2 - 50 Gewichtsprozent zugesetzt wird.

2. Carbonfaserkonjugat nach Anspruch 1, wobei die Carbonfaserstrukturen einen flächenbasierten kreisäquivalenten mittleren Durchmesser von 50 - 100 $\mu$m aufweisen.

3. Carbonfaserkonjugat nach Anspruch 1 oder 2, wobei die Carbonfaserstrukturen eine Schüttdichte von 0,0001 - 0,05 g/cm$^3$ aufweisen.

4. Carbonfaserkonjugat nach einem der Ansprüche 1 - 3, wobei die Carbonfaserstrukturen eine Verbrennungsinitiierungstemperatur in Luft von nicht unter 750°C aufweisen.

5. Carbonfaserkonjugat nach einem der Ansprüche 1 - 4, wobei die Carbonfaserstrukturen unter Verwendung von mindestens zwei Kohlenstoffverbindungen mit unterschiedlichen Zersetzungstemperaturen als Kohlenstoffquelle produziert werden.

**Revendications**

1. Conjugué de fibres de carbone qui consiste en des structures de fibres de carbone et un liant par lequel les structures de fibres de carbone sont liées ensemble,
   dans lequel chacune des structures de fibres de carbone est synthétisée par un procédé CVD qui comprend de gazéifier un mélange de composé carboné et d'un catalyseur en tant qu'une matière première, d'alimenter le mélange gazéifié dans un four réactionnel avec un gaz vecteur, et de permettre à l'hydrocarbure de se décomposer thermiquement à 800°C-1300°C, dans lequel en tant que le composé carboné au moins deux composés carbonés qui ont des températures de décomposition différentes sont utilisés et/ou le mélange gazéifié alimenté dans le four réactionnel à partir d'un orifice d'alimentation est forcé à former un écoulement turbulent à proximité de l'orifice d'alimentation, et dans lequel chacune des structures de fibres de carbone comprend un réseau tridimensionnel de fibres de carbone, chacun ayant un diamètre externe de 15-100 nm, dans lequel la structure de fibres de carbone comprend en outre une partie granulaire avec laquelle les fibres de carbone sont liées dans un état dans lequel les fibres de carbone s'étendent vers l'extérieur à partir de la partie granulaire, et dans lequel la partie granulaire est produite dans un procédé de croissance des fibres de carbone et un diamètre de particule de la partie granulaire est en moyenne 1,3 fois ou plus supérieur à des diamètres externes des fibres de carbone ;
   dans lequel le rapport $I_D/I_G$ des structures de fibres de carbone déterminé par spectroscopie de Raman est pas supérieur à 0,2 ; et
   dans lequel le liant est ajouté à une quantité comprise dans la plage allant de 0,2 à 50% en poids.

2. Conjugué de fibres de carbone selon la revendication 1, dans lequel les structures de fibres de carbone ont un diamètre moyen équivalent du cercle basé sur l'aire de 50 à 100 $\mu$m.

3. Conjugué de fibres de carbone selon la revendication 1 ou la revendication 2, dans lequel les structures en fibres de carbone ont une densité apparente de 0,0001 à 0,05 g/cm$^3$.

4. Conjugué de fibres de carbone selon l'une quelconque des revendications 1 à 3, dans lequel les structures de fibres de carbone ont une température d'initiation de combustion dans l'air pas inférieure à 750°C.

5. Conjugué de fibres de carbone selon l'une quelconque des revendications 1 à 4, dans lequel les structures de fibres de carbone sont produites en utilisant comme sources de carbone au moins deux composés carbonés qui ont des températures de décomposition différentes.

**Fig.1**

**Fig.2**

Fig.3

CNRI  SEI  7.0kV  X2,500  10μm  WD 5.9mm

Fig.4A

Fig.4B

Fig.5

**Fig.6**

**Fig.7**

Fig.8

**EP 1 878 816 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2862578 B
- JP 2004119386 A
- EP 1707655 A